(19) Europäisches Patentamt / European Patent Office / Office européen des brevets

(11) **EP 3 889 729 A1**

(12) **EUROPEAN PATENT APPLICATION**
published in accordance with Art. 153(4) EPC

(43) Date of publication:
**06.10.2021 Bulletin 2021/40**

(21) Application number: **18941367.7**

(22) Date of filing: **28.11.2018**

(51) Int Cl.:
**G05D 3/12** *(2006.01)*

(86) International application number:
**PCT/CN2018/118025**

(87) International publication number:
**WO 2020/107292 (04.06.2020 Gazette 2020/23)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: SZ DJI Technology Co., Ltd.
**Shenzhen, Guangdong 518057 (CN)**

(72) Inventors:
• **FAN, Qinghe**
  **Shenzhen, Guangdong 518057 (CN)**
• **MA, Tianhang**
  **Shenzhen, Guangdong 518057 (CN)**

(74) Representative: **Goddar, Heinz J.**
**Boehmert & Boehmert**
**Anwaltspartnerschaft mbB**
**Pettenkoferstrasse 22**
**80336 München (DE)**

(54) **CONTROL METHOD FOR GIMBAL, GIMBAL, MOBILE PLATFORM, AND COMPUTER READABLE STORAGE MEDIUM**

(57)     A gimbal control method, a gimbal, a mobile platform, and a computer-readable storage medium. The control method includes: when a trigger event indicating that a gimbal enters a storage mode is detected, controlling rotation of a rotation shaft structure to a set position to make the gimbal satisfy the preset storage form; and control the rotation shaft structure to remain at the set position for a preset duration.

When a trigger event indicating that the gimbal enters the storage mode is detected, control the rotation shaft structure to rotate to a set position to make the gimbal to satisfy a preset storage form — 01

Control the rotation shaft structure to remain at the set position for a preset duration — 02

FIG. 1

EP 3 889 729 A1

**Description**

**TECHNICAL FIELD**

The disclosure relates to the technical field of gimbal, in particular relates to a gimbal control method, gimbal, mobile platform and computer-readable storage medium.

**BACKGROUND TECHNOLOGY**

A gimbals is powered off entirely after it is turned off. At this moment, the gimbal may be in any form. If a user desires to place the gimbal in a storage box, the user need to use hands to put the gimbal in a predetermined form and place it in the storage box. However, this method is difficult to operate and can waste considerable amount of time of the user.

**SUMMARY OF THE DISCLOSURE**

Embodiments of the present disclosure provide a control method of a gimbal, a gimbal, a mobile platform, and a computer-readable storage medium.

The control method according to an embodiment of the present disclosure is applied to a gimbal. The gimbal includes at least one rotation shaft structure, and the method includes: when a trigger event indicating that the gimbal enters a storage mode is detected, controlling the rotation shaft structure to set a position so that the gimbal meets a preset storage form; controlling the rotation shaft structure to maintain a preset duration at the set position.

The gimbal according to an embodiment of the present disclosure includes at least one rotation shaft structure and a processor, and the processor is configured to: when a trigger event indicating that the gimbal enters the storage mode is detected, control the rotation of the rotation shaft structure to a set position to make the gimbal satisfy a preset storage form; and control the rotation shaft structure to remain at the set position for a preset duration.

The mobile platform according to an embodiment of the present disclosure includes a body and the above-mentioned gimbal, and the gimbal is disposed on the body.

The computer-readable storage medium of the embodiment of the present disclosure stores a computer program which can be executed by a processor to complete the above control method.

Embodiments of the present disclosure provide a control method for gimbal, gimbal, a mobile platform, and a computer-readable storage medium. In the control method of the gimbal, the rotation shaft structure is controlled to rotate to the set position to make the gimbal satisfy the preset storage form, so that the user can conveniently place the gimbal into the storage box without swinging the gimbal, which can save the user time required to store the gimbal.

Additional aspects and advantages of the embodiments of the present disclosure will be partially given in the following description, and some will become apparent from the following description, or be learned through practice of the embodiments of the present disclosure.

**BRIEF DESCRIPTION OF THE DRAWINGS**

The above and/or additional aspects and advantages of the present disclosure will become apparent and easily understood from the description of the embodiments in conjunction with the following drawings, in which:

FIG. 1 is a schematic flowchart of a method of controlling a gimbal according to some embodiments of the present disclosure;
FIG. 2 is a schematic structural diagram of a gimbal according to some embodiments of the present disclosure;
FIGs. 3 to 5 are schematic flowcharts of the control method of the gimbal according to some embodiments of the present disclosure;
FIG. 6 is a schematic diagram of a joint angle closed-loop control method of some embodiments of the present disclosure;
FIGs. 7 and 8 are schematic flowcharts of a control method of a gimbal according to some embodiments of the present disclosure;
FIG. 9 is a schematic diagram of a closed-loop attitude control method according to some embodiments of the present disclosure;
FIGs. 10 to 12 are schematic flowcharts of the control method of the gimbal according to some embodiments of the present disclosure;
FIG. 13 is a schematic diagram of a mobile platform according to some embodiments of the present disclosure; and
FIG. 14 is a schematic diagram of connection between the gimbal and the computer-readable storage medium according to some embodiments of the present disclosure.

Reference Numerals: aerial vehicle 1000, gimbal 100, rotation shaft structure 10, roll shaft structure 11, pitch shaft structure 12, yaw shaft structure 13, roll axis motor 142, pitch axis motor 144, yaw axis motor 146, roll axis frame 152, pitch axis frame 154, yaw axis frame 156, processor 20, imaging unit 30, display screen 40, hand-held portion 50, storage box 200, body 300, and computer-readable storage medium 400.

## DETAILED DESCRIPTION OF THE EMBODIMENTS

The embodiments of the present disclosure are described in detail below. Examples of the embodiments are shown in the drawings, in which the same or similar reference numerals indicate the same or similar elements or elements having the same or similar functions. The embodiments described below with reference to the drawings are exemplary, and are only used to explain the present disclosure, and cannot be construed as limiting the disclosure.

In the description of the present disclosure, it should be understood that the terms "first" and "second" are used for description purposes only, and cannot be understood as indicating or implying relative importance or implicitly indicating the number of technical features indicated. Thus, features defined as "first" and "second" may explicitly or implicitly include one or more of the features. In the description of the present disclosure, the meaning of "plurality" is two or more, unless otherwise specifically limited.

In the description of the present disclosure, it should be noted that, unless otherwise clearly specified and defined, the terms "installation", "connection", and "connection" should be understood in a broad sense. For example, the connection can be a fixed connection or a detachable connection, or an integral connection; or it may be mechanical, electrical, or a communication with each other; or it may be a direct connection, or an indirect connection through an intermediary, may be a connection between two components or an interaction of the two components. Those of ordinary skill in the art can understand the specific meanings of the above terms in the present disclosure according to specific situations.

The following disclosure provides many different embodiments or examples for implementing different structures of the present disclosure. In order to simplify the disclosure of the present disclosure, the components and settings of specific examples are described below. Of course, they are merely examples, and the purpose is not to limit the disclosure. In addition, the present disclosure may repeat reference numerals and/or reference letters in different examples. Such repetition is for the purpose of simplicity and clarity, and does not itself indicate the relationship between the various embodiments and/or settings discussed. In addition, the present disclosure provides various examples of specific processes and materials, but those of ordinary skill in the art may be aware of the application of other processes and/or the use of other materials.

The embodiments of the present disclosure are described in detail below. Examples of the embodiments are shown in the drawings, in which the same or similar reference numerals indicate the same or similar elements or elements having the same or similar functions. The embodiments described below with reference to the drawings are exemplary, and are only used to explain the present disclosure, and cannot be construed as limiting the present disclosure.

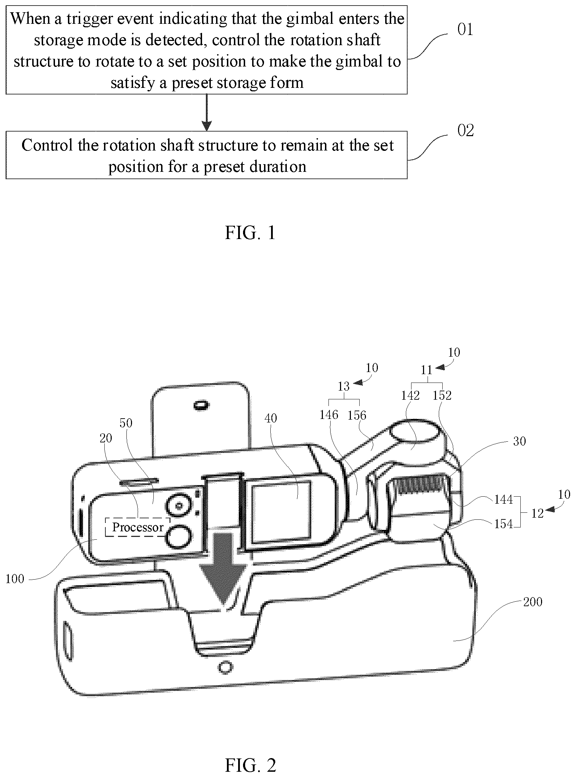

Referring to FIGs. 1 and 2, the control method of the embodiment of the present disclosure may be used in a gimbal 100, and the gimbal 100 may include at least one rotation shaft structure 10. The method includes:

01: When a trigger event indicating that the gimbal 100 enters the storage mode is detected, controlling the rotation shaft structure 10 to rotate to a set position to make the gimbal 100 to satisfy a preset storage form.
02: Controlling the rotation shaft structure 10 to remain at the set position for a preset duration.

Referring to FIG. 2, the gimbal 100 according to the embodiment of the present disclosure includes at least one rotation shaft structure 10 and a processor 20. The processor 20 is configured to: when the trigger event indicating that the gimbal 100 enters the storage mode is detected, control the rotation shaft structure 10 to the set position to make the gimbal 100 to satisfy the preset storage form; and control the rotation shaft structure 10 to remain at the set position for the preset duration.

That is, the control method according to the embodiment of the present disclosure may be implemented by the gimbal 100 according to the embodiments of the present disclosure, and steps 01 and 02 may be implemented by the processor 20.

It can be understood that the position of the processor shown in FIG. 2 is only a schematic illustration and is not limited hereto, and the definition will not be repeated after this description.

It can be understood that the set position may be set before the gimbal 100 leaves the factory, or may be customized by a user. When the set position is customized by the user, the gimbal 100 can have multiple different preset storage forms to match different storage boxes 200, and the user can select the corresponding storage box 200 according to the usage requirements and select corresponding preset storage forms.

The control method of the gimbal 100 and the gimbal 100 according to the embodiments of the present disclosure control the rotation shaft structure 10 to rotate to the set position to make the gimbal 100 to satisfy the preset storage form, so that the user can conveniently move the gimbal 100 without swinging. The gimbal 100 may be placed in the storage box, which can save the time required for the user to store the gimbal 100. In addition, the rotation shaft structure 10 may be controlled to remain at the set position for the preset duration, so that the gimbal 100 maintains the preset storage form within the preset duration, which is convenient for the user to place the gimbal 100 into the storage space within the preset duration .

In one embodiment, the preset duration is 5 seconds, which not only meets the user's need to store the gimbal 100, but also reduces the power consumption of the gimbal 100. Of course, the preset duration can also be 3 seconds, 8 seconds, 12 seconds, 15 seconds, and so on, or it can be customized according to user needs, which is not specifically limited here.

Further referring to FIG. 2, in some embodiments, the gimbal 100 may include a hand-held gimbal 100. The hand-held gimbal 100 further includes, for example, an imaging unit 30, a display screen 40, and a hand-held portion 50. The hand-held portion 50 is configured to support the imaging unit 30, and the display unit 40 is disposed on the hand-held portion 50. The imaging unit 30 can be configured to capture images. In order to protect the hand-held gimbal 100, after using the hand-held gimbal 100, the hand-held gimbal 100 can be placed in the storage box 200. If the user swings the hand-held gimbal 100 with both hands to place the gimbal 100 in the storage box 200, the method can be difficult to operate and waste considerable amount of time of the user. And if the user operates incorrectly, damage can be easily caused to it when the hand-held gimbal 100 is placed into the storage box 200. Therefore, the control method of the embodiments of the present disclosure may be used to control the hand-held gimbal 100 to make the hand-held gimbal 100 satisfy the preset storage form, so that the user can easily place the gimbal 100 into the storage box 200, which reduces the mistakes caused by the user's manual operation, thereby reducing the risk of causing damages to the hand-held gimbal 100.

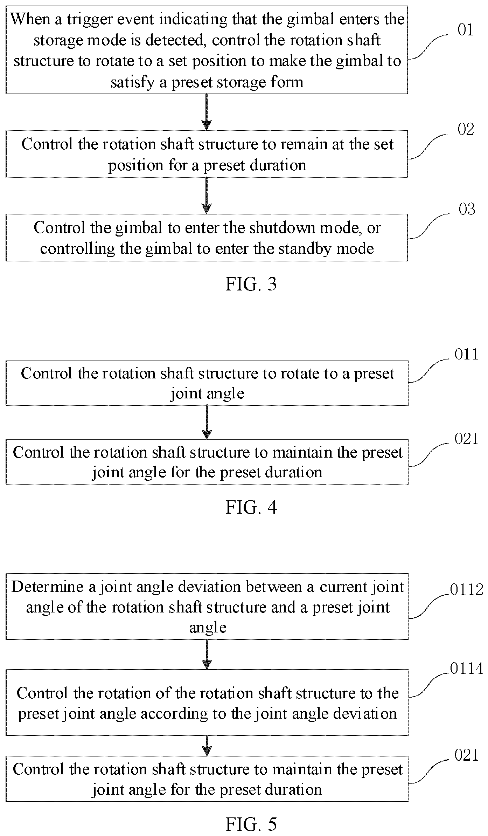

Referring to FIG. 3, in some implementations, after step 02, the method further includes:

03: Controlling the gimbal 100 to enter the shutdown mode, or controlling the gimbal 100 to enter the standby mode.

Taking the hand-held gimbal 100 in FIG. 2 as an example, in some embodiments, the processor 20 is further configured to control the gimbal 100 to enter the shutdown mode or control the gimbal after the rotation shaft structure 10 is maintained at the set position for the preset duration or the gimbal 100 enters the standby mode. That is, step 03 may be implemented by the processor 20.

Specifically, when the gimbal 100 satisfies the preset storage form, the gimbal 100 is generally not in the operating state; that is, the gimbal 100 is not operating at this time (e.g., the imaging unit 30 may not be recording the external environment at this time). Therefore, it is possible to control the gimbal 100 to enter the shutdown mode or the standby mode after the preset duration, thereby reducing insignificant operations on the gimbal 100 and reducing power consumption of the gimbal 100.

After the gimbal 100 remains at the set position for the preset duration, the entry into the shutdown mode or the standby mode can be set before the gimbal 100 leaves the factory, or can be customized by the user. The custom setting can be saved in the gimbal 100 before it reaches the set position, or may also set during the process the gimbal 100 in the process of maintaining the preset duration at the preset position, which is not specifically limited here.

Referring to FIG. 4, in some implementations, step 01 includes:

011: Controlling the rotation shaft structure 10 to rotate to a preset joint angle.

Step 02 includes:

021: Controlling the rotation shaft structure 10 to maintain the preset joint angle for the preset duration.

Taking the hand-held gimbal 100 shown in FIG. 2 as an example, in some embodiments, the processor 20 is configured to: control the rotation shaft structure 10 to rotate to the preset joint angle; and control the rotation shaft structure 10 to maintain the preset joint angle for the preset duration.

That is, steps 011 and 021 can be implemented by the processor 20.

Specifically, the rotation shaft structure 10 can rotate to a set position by controlling a joint angle of the rotation shaft structure 10. The controlling of the joint angle can be achieved by a joint angle closed-loop control method, which is not limited by universal joint lock configuration of the gimbal 100, thereby facilitating the adjustment of the rotation shaft structure 10 to any position that satisfies the storage needs.

Referring to FIG. 5, in some implementations, step 011 includes:

0112: Determining a joint angle deviation between a current joint angle of the rotation shaft structure 10 and a preset joint angle.

0114: Controlling the rotation of the rotation shaft structure 10 to the preset joint angle according to the joint angle deviation.

Taking the hand-held gimbal 100 in FIG. 2 as an example, in some embodiments, the processor 20 is configured to: determine the joint angle deviation between the current joint angle of the rotation shaft structure 10 and the preset joint angle; and control the rotation shaft structure 10 to rotate to the preset joint angle according to the joint angle deviation.

That is, step 0112 and step 0114 can be implemented by the processor 20.

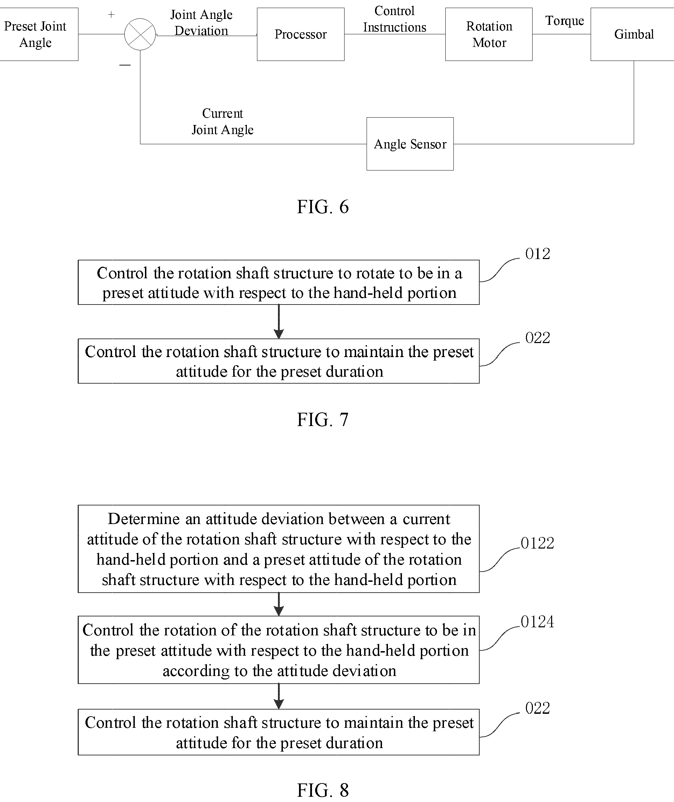

Specifically, referring to FIG. 6, when the rotation shaft structure 10 is controlled by the joint angle closed-loop control method, the current joint angle and the preset joint angle of the rotation shaft structure 10 may be determined first. The current joint angle can be obtained by an angle sensor, the preset joint angle is the joint angle when the rotation shaft structure 10 is at the set position, and can be preset in the storage component of the gimbal 100, and then the joint angle deviation between the current joint angle and the preset joint angle can be calculated, and the operating current and/or torque of the rotation shaft structure 10 can be determined by the joint angle deviation. According to the operating current and/or the torque, the rotation of the rotation shaft structure 10 can be controlled to rotate the rotation shaft structure 10 to the preset joint angle. Accordingly, the rotation shaft structure 10 can be adjusted to the set position simply, quickly, and accurately, through the closed-loop control of the joint angle.

Further referring to FIG. 2, in some embodiments, at least one rotation shaft structure 10 may be configured to be at least one of: a roll shaft structure 11 configured to rotate around a roll axis, a pitch shaft structure 12 configured to rotate around a pitch axis, and the yaw shaft structure 13 configured to rotate around yaw axis. Each rotation shaft structure 10 may include a rotation shaft motor and a rotation shaft frame; that is, the roll rotation shaft structure 11 may include a roll shaft motor 142 and a roll shaft frame 152, the pitch shaft structure 12 may include a pitch shaft motor 144 and a pitch shaft frame 154, and the yaw shaft structure 13 may include a yaw axis motor 146 and a yaw axis frame 156.

In some embodiments, the rotation shaft structure 10 further includes an electronic speed control (ESC). The angle sensor includes a magnetic ring and a magnetic encoder. The magnetic ring is disposed on the rotor of the rotation shaft motor, and the magnetic encoder is disposed on the ESC. In the encoder, the magnetic encoder can obtain rotation position of the magnetic ring to determine position of the rotor to further determine the current joint angle. When disposing the magnetic ring, due to uncertainty of the positional relationship between the magnetic ring and the rotor, there is generally an offset angle between the rotational position of the magnetic ring obtained by the magnetic encoder and the rotational position of the rotor. The offset angle is detected through experiments and stored in the storage component of the gimbal 100, so that the rotational position of the rotor and the offset angle can be determined by the rotational position of the magnetic ring to determine the current joint angle.

In some embodiments, when the roll axis, the pitch axis, and the yaw axis are respectively orthogonal, the joint angle of the roll shaft structure 11 can be a first set joint angle, and an absolute difference between the preset joint angle corresponding to the roll shaft structure 11 and the first set joint angle may be 90 degrees. And/or, when the roll axis, pitch axis, and yaw axis are respectively orthogonal, a joint angle of the pitch shaft structure 12 is the second set joint angle, the absolute difference between the preset joint angle corresponding to the pitch shaft structure 12 and the second set joint angle is 0 degree. And/or, when the roll axis, pitch axis, and yaw axis are respectively orthogonal, a joint angle of the yaw shaft structure 13 is the third set joint angle, and the absolute difference between the preset joint angle corresponding to the yaw shaft structure 13 and the third set joint angle is 90 degrees.

Specifically, in some embodiments, when the roll axis, the pitch axis, and the yaw axis are orthogonal, respectively, the first set joint angle, the second set joint angle, and the third set joint angle may be all viewed as 0 degree, and the roll shaft structure 11, the pitch shaft structure 12, and the yaw shaft structure 13 are all at zero positions.

In the embodiments of the present disclosure, the joint angle is a vector, and one rotational direction of the rotation shaft structure 10 can be defined as a positive rotational direction, and the other rotational direction can be a reverse rotational direction. When the joint angle is positive, the rotational direction is a positive rotational direction. When the joint angle is negative, the rotational direction is the reverse rotational direction. Each rotation shaft structure 10 includes corresponding positive rotational direction and reverse rotational direction. The absolute difference between the preset joint angle corresponding to the roll shaft structure 11 and the first set joint angle is 90 degrees, which may be that, the difference between the preset joint angle corresponding to the roll shaft structure 11 and the first set joint angle can be positive 90 degrees; that is, the direction of the preset joint angle of the roll shaft structure 11 with respect to the first set joint angle is the positive rotational direction, and the angle is 90 degrees. The absolute difference between the preset joint angle corresponding to the pitch shaft structure 12 and the second set joint angle is 0 degree; that is, the second set joint angle is the preset joint angle corresponding to the pitch shaft structure 12. The absolute difference between the preset joint angle corresponding to the yaw shaft structure 13 and the third set joint angle is 90 degrees, which may be that, the difference between the preset joint angle corresponding to the yaw shaft structure 13 and the third set joint angle is negative 90 degrees; that is, the direction of the preset joint angle of the yaw shaft structure 13 with respect to the third set joint angle is the reverse rotational direction, and the angle is 90 degrees. Accordingly, the roll shaft structure 11, the pitch shaft structure 12 and the yaw shaft structure 13 are relatively converged, so that the volume occupied by the gimbal 100 can be minimized, and the storage space required by the gimbal 100 can be reduced.

Of course, the first set joint angle, the second set joint angle, and the third set joint angle may also be other set values, such as 20 degrees, 90 degrees, and 125 degrees. The absolute difference between the preset joint angle corresponding to the roll shaft structure 11 and the first set joint angle, the absolute difference between the preset joint angle corresponding to the pitch shaft structure 12 and the second set joint angle, and the absolute difference between the preset joint angle corresponding to the yaw shaft structure 13 and the third set joint angle can also be set as needed. For example, the absolute difference can be set according to the storage form of the storage box 200, so that each rotation shaft structure 10 can rotate to the corresponding preset joint angle, and the gimbal 100 can be conveniently placed in the storage box 200.

Referring to FIGs. 2 and 7, in some embodiments, the gimbal 100 includes a hand-held portion 50, and at least one rotation shaft structure 10 is disposed on the hand-held portion 50. Step 01 includes:

012: controlling the rotation shaft structure 10 to rotate to be in a preset attitude with respect to the hand-held portion 50;

Step 02 includes:

022: Controlling the rotation shaft structure 10 to maintain the preset attitude for the preset duration.

Taking the hand-held gimbal 100 in FIG. 2 as an example, in some embodiments, the gimbal 100 includes a hand-held portion 50. At least one rotation shaft structure 10 is disposed on the hand-held portion 50, and the processor 20 is configured to: control the rotation shaft structure 10 to rotate to be in a preset attitude with respect to the hand-held portion 50; and maintain the control shaft structure 10 in the preset attitude for the preset duration.

That is, step 012 and step 022 may be implemented by the processor 20.

Specifically, it is possible to rotate the shaft structure 10 to a set position by controlling the attitude of the rotation shaft structure 10. The control of the attitude can be achieved by the closed-loop control of the attitude or by the closed-loop of the joint angle, so that the shaft structure 10 can be accurately adjusted to the set position.

When implementing the joint angle closed-loop, reference may be made to the content shown in the embodiment shown in FIG. 4 and the embodiment shown in FIG. 5, which will not be repeated here.

Referring to FIG. 8, in some embodiments, the attitude control may be implemented by attitude closed-loop control. Step 012 includes:

0122: Determining an attitude deviation between a current attitude of the rotation shaft structure 10 with respect to the hand-held portion 50 and a preset attitude of the rotation shaft structure 10 with respect to the hand-held portion 50.

0124: Controlling the rotation of the rotation shaft structure 10 to be in the preset attitude with respect to the hand-held portion 50 according to the attitude deviation.

Taking the hand-held gimbal 100 in FIG. 2 as an example, in some embodiments, the processor 20 is configured to: determine the current attitude of the rotation shaft structure 10 with respect to the hand-held portion 50 and the preset attitude of the rotation shaft structure 10 with respect to the hand-held portion 50.; and control the attitude deviation between the rotation of the rotation shaft structure 10 to the preset attitude with respect to the hand-held portion 50 according to the attitude deviation.

That is, steps 0122 and 0124 can be implemented by the processor 20.

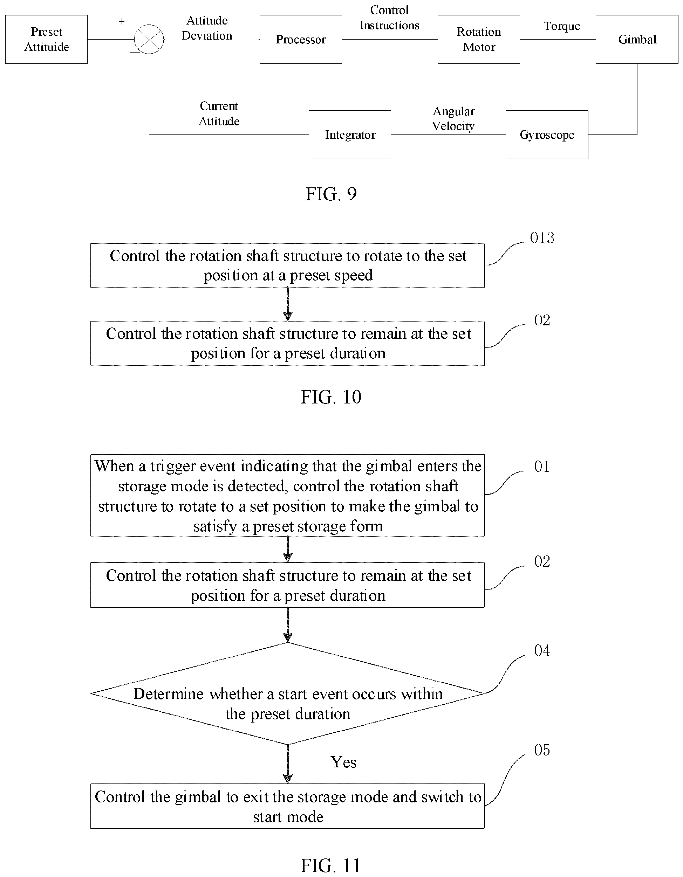

Specifically, referring to FIG. 9, when the rotation shaft structure 10 is controlled by the closed-loop attitude control method, the current attitude and the preset attitude of the rotation shaft structure 10 with respect to the hand-held portion 50 can be determined first.

In some embodiments, the current attitude of the rotation shaft structure 10 with respect to the hand-held portion 50 may be determined by the current attitude of the rotation shaft structure 10 in Euler coordinates, and the current attitude of the rotation shaft structure 10 in the Euler coordinate system may be measured by setting the inertial measurement unit (e.g., gyroscope, accelerometer) of the gimbal 100. The preset attitude can be determined as follows:

$$q_{cam} = q_{base} \cdot q_{base \to out} \cdot q_{out \to mid} \cdot q_{mid \to inn}$$

$q_{cam}$ is target attitude of the load on the gimbal 100 in geodetic coordinate system; $q_{base}$ is attitude of the hand-held portion 50 of the gimbal 100 or the gimbal base in geodetic coordinates; $q_{base \to out}$ is rotation quaternion of the hand-held portion 50 or the gimbal base to the gimbal 100 outer frame, which is formed by a preset joint angle corresponding to the outer frame; $q_{out \to mid}$ is rotation quaternion of the gimbal 100 outer frame to the gimbal 100, which is formed by a preset joint angle corresponding to midframe rotation; and $q_{mid \to inn}$ is rotation quaternion of the gimbal 100 middle frame to gimbal 100 inner frame, which is formed by a preset joint angle corresponding to the inner frame.

After the above-mentioned target attitude is obtained, the target attitude of the corresponding rotation shaft structure 10 can be converted to the gimbal body coordinate system to obtain the preset attitude of the rotation shaft structure 10 with respect to the hand-held portion 50. Similarly, the current attitude of the rotation shaft structure 10 can be converted into the gimbal body coordinate system, so that the attitude deviation between the current attitude and the preset attitude of the rotation shaft structure 10 with respect to the hand-held portion 50 can be calculated in the gimbal body coordinate system. Based on the attitude closed-loop control method, the operating current and/or torque of the rotation shaft structure 10 can be determined by the attitude deviation. According to the operating current and/or the torque, the rotation shaft structure 10 can be controlled to rotate the rotation shaft structure 10 to be in the preset attitude with respect to the hand-held portion 50.

In some embodiments, the attitude control can be implemented according to the joint angle of the rotation shaft structure 10. Step 012 includes: obtaining the current joint angle and the preset joint angle of the rotation shaft structure 10, and determining an expected joint angular velocity of the rotation shaft structure 10 according to the current joint angle and the preset joint angle (e.g., determining according to the deviation between the current joint angle and the preset joint angle, and adjusting the size as needed), then converting the expected joint angular velocity of the rotation shaft structure 10 to an expected Euler angular velocity of the Euler coordinate system through coordinate conversion relationship to obtain a corresponding preset attitude according to the expected Euler angular velocity, and controlling the rotation shaft structure 10 to rotate to be in the preset attitude with respect to the hand-held portion 50 according to the expected Euler angular velocity.

Taking the ZXY three-axis gimbal 100 shown in FIG. 2 as an example, assuming that Z is the yaw axis, X is the roll axis, and Y is the pitch axis. In this configuration, the yaw axis frame 156 is the outer frame, the roll axis frame 152 is the middle frame, and the pitch axis frame 154 is the inner frame. The yaw axis motor 146 is configured to drive the yaw axis frame 156 to rotate, to drive the roll axis motor 142 and the roll axis frame 152, the pitch axis motor 144 and the pitch axis frame 154, and the load mounted on the gimbal 100 to rotate. The roll axis motor 142 is configured to drive the roll axis frame 152 to rotate, so as to drive the pitch axis motor 144, the pitch axis frame 154 and the load to rotate. The pitch axis motor 144 is configured to drive the pitch axis frame 154 to rotate, so as to drive the load to rotate.

During the process of converting the expected joint angular velocity into the expected Euler angular velocity, the conversion relationship between the gimbal joint angular coordinate system and the gimbal body coordinate system is related to the configuration of the gimbal 100. When the gimbal configuration is different, the conversion relationship is different.

In this embodiment, a rotation axis of the coordinate axis of the yaw axis joint angle, Voutz, is [0, 0, 1]; a rotation axis of the coordinate axis of the roll axis joint angle, Vmidx, is [1, 0, 0]; and a rotation axis of the coordinate axis of the pitch axis joint angle, Vinny, is [0, 1, 0]. Voutz, Vmidx and Vinny are converted to the gimbal coordinate system respectively.

$$V_{outz \to b} = Ry' * Rx' * Rz' * V_{outz}$$

$$V_{midx \to b} = Ry' * Rx' * V_{midx}$$

$$V_{inny \to b} = Ry' * V_{inny}$$

Ry', Rx', Rz' correspond to the transpose of Ry, Rx, Rz; Ry, Rx, Rz are the rotation matrix of the joint angle coordinate system around the Y axis (pitch axis), X axis (roll axis), Z axis (yaw axis), respectively, in the reference coordinate system. For example, Ry, Rx, Rz can be as follows:

$$R_y = \begin{bmatrix} cosA, & 0, & -sinA \\ 0, & 1, & 0 \\ sinA, & 0, & cosA \end{bmatrix}$$

$$R_x = \begin{bmatrix} 1, & 0, & 0 \\ 0, & cosA, & sinA \\ 0, & -sinA, & cosA \end{bmatrix}$$

$$R_z = \begin{bmatrix} cosA, & sinA, & 0 \\ -sinA, & cosA, & 0 \\ 0, & 0, & 1 \end{bmatrix}$$

The reference coordinate system is a coordinate system with a joint angle of 0, and A is a converted angle of the joint angle coordinate system to the reference coordinate system.

Specifically, the calculation formula of the expected body angular velocity $W_b$ is as follows:

$$W_b = R_{j \to b} * W_j$$

Rj → b is the conversion of the gimbal joint angle coordinate system to the gimbal body coordinate system, as shown below:

$$R_{j \to b} = [V_{\text{midx} \to b}, \quad V_{\text{inny} \to b}, \quad V_{\text{outz} \to b}]$$
$$= \begin{bmatrix} \cos(\text{inn\_joint\_ang\_rad}), & 0, & -\cos(\text{mid\_joint\_ang\_rad}) * \sin(\text{inn\_joint\_ang\_rad}) \\ 0, & 1, & \sin(\text{mid\_joint\_ang\_rad}) \\ \sin(\text{inn\_joint\_ang\_rad}), & 0, & \cos(\text{inn\_joint\_ang\_rad}) * \cos(\text{mid\_joint\_ang\_rad}) \end{bmatrix}$$

Inn_joint_ang_rad is inner frame joint angle, and mid_joint_ang_rad is middle frame joint angle.

For the two-axis gimbal, the conversion, Rj-b, of the gimbal joint angle coordinate system to the gimbal body coordinate system is as follows:

$$R_{j \to b} = \begin{bmatrix} 0, & -\sin(\text{inn\_joint\_ang\_rad}) \\ 1, & 0 \\ 0, & \cos(\text{inn\_joint\_ang\_rad}) \end{bmatrix}$$

Further, the expected body angular velocity can be converted into the expected Euler angular velocity according to the conversion among the expected body angular velocity, the gimbal body coordinate system, and the Euler coordinate system. The calculation formula of the expected Euler angular velocity Wφ is as follows:

$$W_\varphi = R_{b \to \phi} * W_b$$

$R_{b \to \phi}$ is the conversion of the gimbal body coordinate system to Euler coordinate system, as follows:

$$R_{b \to \phi}$$
$$= \begin{bmatrix} \cos(\text{inn\_euler\_ang\_rad}), & 0, & \sin(\text{inn\_euler\_ang\_rad}) \\ \sin(\text{inn\_euler\_ang\_rad}) * \tan(\text{mid\_euler\_ang\_rad}), & 1, & -\cos(\text{inn\_euler\_ang\_rad}) * \tan(\text{mid\_euler\_ang\_rad}) \\ -\sin(\text{inn\_euler\_ang\_rad}) * \cos(\text{mid\_euler\_ang\_rad}), & 0, & \cos(\text{inn\_euler\_ang\_rad}) * \cos(\text{mid\_euler\_ang\_rad}) \end{bmatrix}$$

inn_euler_ang_rad is inner frame Euler angle, mid_euler_ang_rad is middle frame Euler angle, the inner frame Euler angle and the middle frame Euler angle are the expected Euler angles of the gimbal 100 when the last closed-loop, which is also the real-time attitude of the gimbal 100 when the last closed-loop ends.

Accordingly, through the above process, the expected joint angular velocity can be converted to the expected Euler angular velocity via the gimbal body coordinate system. After determining the expected Euler angular velocity, the expected attitude of the gimbal 100 can be determined according to the expected Euler angular velocity and the current attitude of the gimbal 100. Assuming that the movement duration of the gimbal 100 is t, the expected attitude can be as follows:

$$\begin{bmatrix} \text{tar\_euler\_roll}(t) \\ \text{tar\_euler\_pitch}(t) \\ \text{tar\_euler\_yaw}(t) \end{bmatrix} = \begin{bmatrix} w_X t + \text{tar\_euler\_roll\_init} \\ w_Y t + \text{tar\_euler\_pitch\_init} \\ w_Z t + \text{tar\_euler\_yaw\_init} \end{bmatrix}$$

tar_euler_roll (t) is component corresponding to the roll axis of the expected attitude, tar_euler_pitch (t) is component corresponding to the pitch axis of the desired attitude, tar_euler_yaw (t) is component corresponding to the yaw axis of the desired attitude, and Wx is expected Euler angular velocity of the corresponding roll axis, Wy is expected Euler angular velocity corresponding to the pitch axis, Wz is expected Euler angular velocity corresponding to the yaw axis, tar_euler_roll_init is Euler angle of the corresponding roll axis of the current attitude, tar_euler_pitch_init is Euler angle of the corresponding pitch axis of the current attitude, tar_euler_yaw_init is Euler angle of the corresponding yaw axis of the current attitude.

In summary, according to the movement duration, t, of the gimbal 100 and the preset joint angle, the expected attitude of the gimbal 100 at any time can be obtained; that is, the preset joint angle corresponding to each frame of the gimbal 100. At the same time, according to the current attitude and the expected attitude, the closed-loop attitude can be used to control the gimbal 100, so that the rotation shaft structure 10 in the gimbal 100 can maintain the preset attitude with respect to the hand-held portion 50, and accordingly, the gimbal 100 can satisfy the preset storage form.

In the above example, the yaw axis frame 156 is the outer frame, the roll axis frame 152 is the middle frame, and the pitch axis frame 154 is the inner frame. It can be understood that in other embodiments, there may be other connection relationships of each frame, which is not specifically limited here.

Accordingly, when there are multiple rotation shaft structures 10, the corresponding rotation shaft structures 10 can be controlled correspondingly according to the operating parameters of each rotation shaft structure 10. For example, the rotation shaft structure 10 includes the roll shaft structure 11, the pitch shaft structure 12, and the yaw shaft structure 13. The current joint angle of each rotation shaft structure 10 can be obtained through the angle sensor of each rotation shaft structure 10, and then closed-loop control may be performed to the joint angle of the rotation shaft structure 10 according to the current joint angle and the preset joint angle of each rotation shaft structure 10. Likewise, the attitude closed-loop control can also be performed to the rotation shaft structure 10 according to the current attitude and preset attitude of each rotation shaft structure 10 with respect to the hand-held portion 50. The current attitude and the preset attitude should be understood as attitude components. For example, current attitude (roll, pitch, yaw) of the gimbal 100 is (A, B, C), and current attitude component of the roll shaft structure 11 is A, current attitude component of the pitch shaft structure 12 is B, the current attitude component of the yaw shaft structure 13 is C.

In some embodiments, when the roll axis, the pitch axis, and the yaw axis are orthogonal, respectively, and the first set joint angle, the second set joint angle, and the third set joint angle are all 0 degree, then the rotation shaft structure 10 can rotate to any joint angle by the joint angle closed-loop control method. In the special configuration of the gimbal 100 (e.g., the pitch-rollyaw three-axis orthogonal configuration), due to the joint lock limitation of the attitude closed-loop control method, the attitude closed-loop method cannot adjust the joint angle of the roll shaft structure 11 to be positive 90 degrees or negative 90 degrees. Therefore, in the above case, if it is necessary to adjust the joint angle of the roll shaft structure with respect to 0 degrees by positive 90 degrees or negative 90 degrees, the closed-loop joint angle control may be preferred. In other embodiments, when the roll axis, the pitch axis, and the yaw axis are all non-orthogonal, or when they are orthogonal, there is no need to perform a positive 90 degree or negative 90 degree adjustment to the roll axis with respect to the joint angle of 0 degree, the joint angle closed-loop or attitude closed-loop control method can be selected to make the gimbal 100 satisfy the preset storage form.

The rotation range of the rotation shaft structure 10 is greater than 360 degrees, there may be multiple preset joint angles corresponding to the same attitude of the rotation shaft structure 10. For example, when the attitude of the roll shaft structure 11 with respect to the hand-held portion 50 is the preset attitude, if the difference between the preset joint angle corresponding to the roll shaft structure 11 and the first set joint angle can be positive 90 degrees, then when the first set joint angle is 0 degree, the preset joint angle corresponding to the roll shaft structure 11 may also be 90 degrees +360 degrees, 90 degrees +720 degrees, 90 degrees -360 degrees, and so forth. Likewise, the joint angles corresponding to the pitch rotation shaft structure 12 and the yaw rotation shaft structure 13 are similar, which will not be repeated here. However, the preset attitude of the rotation shaft structure 10 with respect to the hand-held portion 50 is unique. For example, the plane where the roll shaft frame 152 of the roll shaft structure 11 belongs to is inclined at 45 degrees with respect to the hand-held portion 50 as the preset attitude, and there can be multiple corresponding preset joint angles.

Accordingly, when the rotation range of the rotation shaft structure 10 is greater than 360 degrees, it is possible to select among a plurality of preset joint angles, so as to select a preset joint angle that is favorable for controlling the rotation shaft structure 10, for example, in order to reduce the rotation distance or rotation time of the rotation shaft structure 10, the preset joint angle with the smallest deviation from the current joint angle among the multiple preset joint angles can be selected as the joint angle in attitude control.

Referring to FIG. 10, in some implementations, step 01 may include:

013: Controlling the rotation shaft structure 10 to rotate to the set position at a preset speed.

Taking the hand-held gimbal 100 in FIG. 2 as an example, in some embodiments, the processor 20 is configured to control the rotation shaft structure 10 to rotate to the set position at a preset speed.

That is, step 013 may be implemented by the processor 20.

Specifically, when the rotation shaft structure 10 is controlled, the rotation shaft structure 10 may rotate at the preset speed, and the preset speed may be preset in the storage component of the gimbal 100. The preset speed is, for example, a constant value, so that it is convenient to control the rotation shaft structure 10. The preset speed can also have a trend to increase first and then decrease, the set position can be first approached at a higher speed to reduce the time required to turn to the set position and the speed may be decreased after approaching the set position to avoid colliding into the limit position of the rotation shaft structure 10, and to avoid the situation of returning after exceeding the set position. In addition, the preset speed can also be determined according to the difference between the current position and the set position of the rotation shaft structure 10. The difference between the current position and the set position can refer to a joint angle deviation or an attitude deviation. The speed can be determined in real-time according to actual operation needs. For example, when the difference between the current position and the set position is relatively large, the preset speed can be relatively large; and when the difference between the current position and the set position is relatively small, the preset speed can be relatively small, which is not specifically limited here.

Referring to FIG. 11, in some embodiments, the method may further include:

> 04: Determining whether a start event occurs within the preset duration.
> 05: When the start event occurs, controlling the gimbal 100 to exit the storage mode and switch to start mode.

Taking the hand-held gimbal 100 in FIG. 2 as an example, in some embodiments, the processor 20 is further configured to: determine whether a start event occurs within a preset duration; and when the start event occurs, control the gimbal 100 to exit the storage mode and switch to the start mode.

That is, step 04 and step 05 can be implemented by the processor 20.

Specifically, when the gimbal 100 is in the storage mode, the gimbal 100 is generally not in the operating state. Therefore, if it is determined that a start event occurs within the preset duration, the gimbal 100 can be controlled to exit the storage mode and switch to the start mode. In the start mode, the rotation shaft motor can perform self-check again (e.g., self-check whether the limit position has been collided) and complete the entire process required for the start. When no start event occurs within the preset duration, the gimbal 100 can be controlled to enter the shutdown mode or enter the standby mode after the preset duration.

In some embodiments, the trigger event and/or the start event may be triggered by one or more of: pressing a button, human touch operation, human biometric verification, movement of the gimbal 100, and state change of the gimbal 100.

In some embodiments, the trigger event and/or the start event to enter the storage mode can be pressing a button, which may be that, e.g., the gimbal 100 includes a physical button (e.g., a power button), and the gimbal 100 enters the storage mode by pressing (e.g., short pressing or long pressing) of the switch button when being in the start mode, or the gimbal 100 enters the storage mode by the pressing (e.g., short pressing or long pressing) of the switch button when being in the shutdown mode or storage mode. Of course, in other embodiments, the gimbal 100 can be controlled to enter the storage mode or enter the normal shutdown mode by short or long pressing, and the trigger event and the start event can also be implemented by different buttons, respectively. In addition, the trigger event and/or start event of entering the storage mode can also be triggered by pressing of a button of the remote control. The remote control may communicate with the gimbal 100, which is not specifically limited herein.

It can be understood that the storage mode and the shutdown mode of the gimbal 100 can be triggered by a trigger event. For example, by short-pressing the switch button, the storage mode can be entered, and the shutdown mode can be automatically entered after the preset duration. Similarly, the storage mode and the standby mode of the gimbal 100 can also be triggered by a trigger event.

In some embodiments, the button may also be a virtual button, such as an icon on the touch display screen on the gimbal 100, and a trigger event and/or a start event to enter the storage mode may be triggered by human touch operation. Of course, the virtual button can also be provided on the remote control that communicates with the gimbal 100.

In some embodiments, the trigger event and/or start event is triggered by human biometric verification, which may be, e.g., a trigger event and/or start event that triggers the entry into the storage mode through face recognition, iris recognition, fingerprint recognition, etc. For example, when the user's left index finger is detected through fingerprint recognition, a trigger event to enter the storage mode is triggered; or when the user's left hand thumb is detected through fingerprint recognition, a start event is triggered. Of course, this biometric verification can also be achieved by the remote control that communicates with the gimbal 100.

In some embodiments, the trigger event and/or the start event are triggered by the movement of the gimbal 100, which may be, e.g., the trigger event and/or the start event that triggers the entry into the storage mode when the gimbal 100 meets a predetermined movement trajectory. For example, when the movement trajectory of the gimbal 100 is upward, the trigger event to enter the storage mode is triggered; when the movement trajectory of the gimbal 100 is shaking from left to right, the start event is triggered.

In some embodiments, the trigger event and/or start event may be triggered by the state change of the gimbal 100, which may be, e.g., the trigger event and/or power-on that triggers the entry into the storage mode according to the attitude change of the rotation shaft structure 10 of the gimbal 100. For example, when the user swings the rotation shaft structure 10 to fold the rotation shaft structure 10, the trigger event to enter the storage mode is triggered; or when the user swings the rotation shaft structure 10 to expand the rotation shaft structure 10, the start event is triggered.

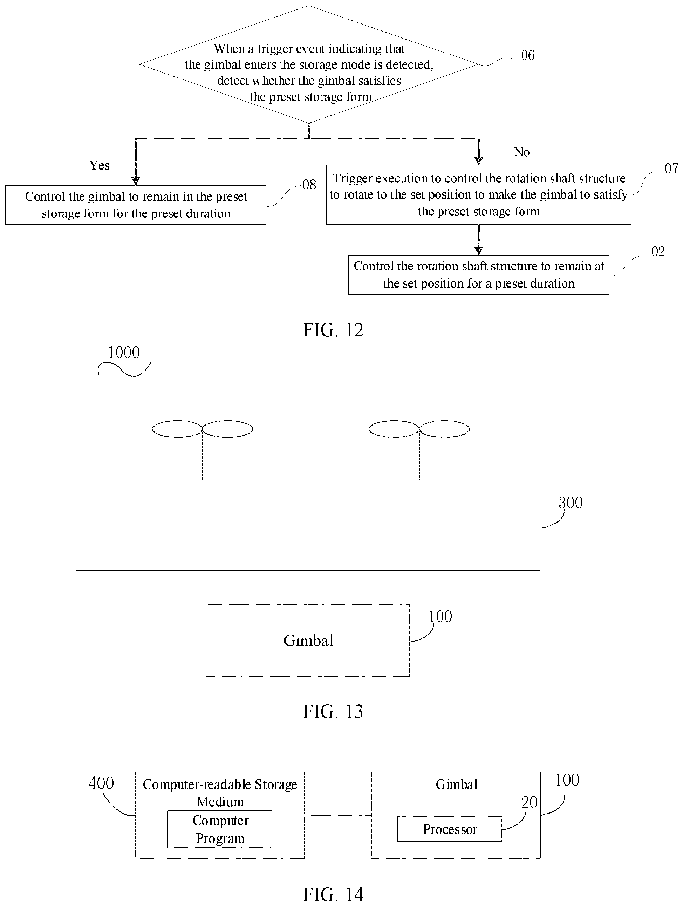

Referring to FIG. 12, in some embodiments, before controlling the rotation of the rotation shaft structure 10 to the set position, the method may further include:

06: Detecting whether the gimbal 100 satisfies the preset storage form.

07: If the gimbal 100 does not satisfy the preset storage form, triggering execution to control the rotation shaft structure 10 to rotate to the set position to make the gimbal 100 to satisfy the preset storage form.

Taking the hand-held gimbal 100 in FIG. 2 as an example, in some embodiments, the processor 20 is further configured to: detect whether the gimbal 100 satisfies the preset storage form; if the gimbal 100 does not satisfies the preset storage form, then trigger the execution to control rotation shaft structure 10 to rotate to the set position, so that the gimbal 100 can satisfy the preset storage form.

That is, step 06 and step 07 can be implemented by the processor 20.

Specifically, before rotating the rotation shaft structure 10, it may be detected whether the gimbal 100 satisfies the preset storage form. That is, whether the current position of the rotation shaft structure 10 is the set position (e.g., whether the current joint angle is the preset joint angle, or detecting whether the current attitude of the rotation shaft structure 10 with respect to the hand-held portion 50 is the preset attitude). When the current position of the rotation shaft structure 10 is not the set position, the gimbal 100 does not satisfy the preset storage form, at this time, the rotation shaft structure 10 can rotate to the set position, so that the gimbal 100 can satisfy the preset storage form to be conveniently placed in the storage box 200.

Further referring to FIG. 12, in some embodiments, after step 06, the method may further include:

08: If the gimbal 100 satisfies the preset storage form, controlling the gimbal 100 to remain in the preset storage form for the preset duration.

Taking the hand-held gimbal 100 in FIG. 2 as an example, in some embodiments, the processor 20 is further configured to control the gimbal 100 to remain in the preset storage form for the preset duration if the gimbal 100 satisfies the preset storage configuration..

That is, step 08 may be implemented by the processor 20.

Accordingly, when it is detected that the gimbal 100 satisfies the preset storage form, the gimbal 100 can be directly controlled to remain in the preset storage form for the preset duration, so that the user can place the gimbal 100 into the storage box 200 within the preset duration. In addition, when it is detected that the gimbal 100 satisfies the preset storage form, unnecessary rotation of the rotation shaft structure 10 can be avoided, to reduce power consumption of the gimbal 100.

The gimbal 100 according to the embodiments of the present disclosure may be applied to a mobile platform; that is, the mobile platform may include the gimbal 100 according to any one of the above embodiments. In addition, the mobile platform may further include a body, and the gimbal 100 may be disposed on the body. The mobile platform may be a hand-held gimbal, and the body of the mobile platform may be the hand-held portion of the hand-held gimbal. Of course, the mobile platform may include, for example, a vehicle, an aerial vehicle, a robot, etc., and the gimbal 100 on the body may be equipped with an imaging device and/or a photographing device and/or other function modules. At the same time, the body as the body of the mobile platform may be the hand-held portion of the gimbal 100. Of course, when the gimbal 100 can be disposed on the body of the mobile platform, and any part of the mobile platform that can be held anywhere can be used as the hand-held portion of the gimbal 100 except for the body.

Referring to FIG. 13, the embodiments of the present disclosure takes the mobile platform as an aerial vehicle 1000 as an example. The aerial vehicle 1000 includes the gimbal 100 and a body 300. The body 300 includes, for example, a center frame, an arm connected to the center frame, and power units connected to the arm, etc.

In one embodiment, the aerial vehicle 1000 may be further provided with a storage slot. When a trigger event indicating that the gimbal 100 enters the storage mode is detected, the rotation shaft structure 10 can be controlled to rotate to a set position, so that the gimbal 100 can satisfy the preset storage form and further store the gimbal 100 in the storage slot. It can be understood that the body of the mobile platform corresponds to the type of the mobile platform. For example, when the mobile platform is a cart, the body is a cart.

It can be understood that the aerial vehicle 1000 may not be provided with a storage slot. By controlling the position of the gimbal 100 with respect to the body to be unchanged within a preset duration, the storage of the aerial vehicle 1000 may also be facilitated.

Referring to FIG. 14, the computer-readable storage medium 400 according to an embodiment of the present disclosure includes a computer program, and the computer program can be executed by the processor 20 to complete the control method in any one of the foregoing embodiments.

For example, referring to FIGs. 1 and 14, the computer program may be executed by the processor 20 to complete the control method described in the following steps:

01: When a trigger event indicating that the gimbal 100 enters a storage mode is detected, controlling the rotation shaft structure 10 to rotate to a set position, so that the gimbal 100 satisfies a preset storage form.

02: Controlling the rotation shaft structure 10 to remain at the set position for the preset duration.

In another example, referring to FIGs. 3 and 14, the computer program may also be executed by the processor 20 to complete the control method described in the following steps:
03: Controlling the gimbal 100 to enter a shutdown mode, or controlling the gimbal 100 to enter a standby mode.

In the description of this specification, the descriptions referring to the terms "one embodiment", "some embodiments", "schematic embodiments", "examples", "specific examples", or "some examples" are meant to be combined with the specific features, structures, materials, or characteristics described in the embodiments or examples included in at least one embodiment or example of the present disclosure. In this specification, the schematic expression of the above-mentioned terms does not necessarily refer to the same embodiment or example. Moreover, the specific features, structures, materials, or characteristics described may be combined in any suitable manner in any one or more embodiments or examples.

Any process or method description in a flowchart or otherwise described herein may be understood as representing a module, segment, or portion of code of executable instructions for performing specific logic functions or steps of the process. The scope of the preferred embodiments of the present disclosure may include additional executions, in which the order may not be shown or discussed, including performing the functions in a substantially simultaneous manner or in reverse order according to the functions involved, which should be understood by those skilled in the art to which the embodiments of the present disclosure belong.

The logic and/or steps represented in the flowchart or otherwise described herein, for example, can be regarded as a sequenced list of executable instructions for performing logic functions, and can be specifically executed in any computer-readable medium for use by instruction execution systems, apparatuses, or devices (e.g., computer-based systems, systems including processors, or other systems that can receive and execute instructions from instruction execution systems, apparatuses and devices), or use in combination with such instruction execution systems, apparatuses, or devices. In this specification, a "computer-readable medium" may be any device that can contain, store, communicate, propagate, or transmit a program for use by or in combination with an instruction execution system, apparatus, or device. More specific examples of computer-readable media (e.g., non-exhaustive list) include the following: electrical connections (e.g., electronic devices) with one or more wires, portable computer disks (e.g., magnetic devices), random-access memory (RAM), read-only memory (ROM), erasable and editable read-only memory (EPROM or flash memory), fiber optic devices, and portable compact disk read-only memory (CDROM). In addition, the computer-readable medium may be other suitable medium on which the program can be printed, for example, obtaining the program electronically by optically scanning the paper or other medium, followed by editing, interpretation, or other appropriate process if necessary, and storing the program in computer memory.

It should be understood that each part of the present disclosure may be implemented by hardware, software, firmware, or a combination thereof. In the above embodiments, multiple steps or methods may be performed using software or firmware that are stored in memory and executed by a suitable instruction execution system. For example, if it is executed by hardware, as in another embodiment, it can be executed by any one or a combination of the following techniques known in the art: logic gate circuit for performing a logic function on a data signal discrete logic circuit, dedicated integrated circuit with appropriate combinational logic gates, programmable gate array (PGA), field programmable gate array (FPGA), etc.

Those of ordinary skill in the art can understand that performing all or part of the steps carried by the above-described implementation method can be accomplished by a program to instruct relevant hardware. The program can be stored in a computer-readable storage medium, and when the program is being executed, one of the steps of the method embodiment or a combination thereof can be included.

In addition, each function unit in each embodiment of the present disclosure may be integrated into one processing module, or each unit may exist alone physically, or two or more units may be integrated into one module. The above-mentioned integrated modules may be executed in the form of hardware or software function modules. If the integrated module is executed in the form of a software function module and sold or used as an independent product, it may also be stored in a computer-readable storage medium.

The storage medium mentioned above may be a read-only memory, a magnetic disk, or an optical disk. Although the embodiments of the present disclosure have been shown and described above, it can be understood that the above-mentioned embodiments are exemplary and cannot be construed as limitations to the disclosure. A person skilled in the art can change, modify, substitute, and vary the foregoing described embodiments within the scope of the disclosure.

**Claims**

1. A gimbal control method, wherein the gimbal comprises at least one rotation shaft structure, comprising:

    when a trigger event indicating that a gimbal enters a storage mode is detected, controlling rotation of the rotation shaft structure to a set position to make the gimbal satisfy a preset storage form; and

controlling the rotation shaft structure to remain at the set position for a preset duration.

2. The method according to claim 1, wherein after controlling the rotation shaft structure to remain at the set position for the preset duration, further comprising:
controlling the gimbal to enter a shutdown mode, or controlling the gimbal to enter a standby mode.

3. The method according to claim 1, wherein:

controlling the rotation of the rotation shaft structure to the set position comprises:
controlling the rotation of the rotation shaft structure to a preset joint angle; and
controlling the rotation shaft structure to remain at the set position for the preset duration comprises:
controlling the rotation shaft structure to maintain the preset joint angle for the preset duration.

4. The method according to claim 3, wherein controlling the rotation of the rotation shaft structure to the preset joint angle comprises:

determining a joint angle deviation between a current joint angle of the rotation shaft structure and the preset joint angle; and
controlling the rotation of the rotation shaft structure to the preset joint angle according to the joint angle deviation.

5. The method according to claim 3, wherein the at least one rotation shaft structure comprises at least one of: a roll shaft structure configured to rotate around a roll axis, a pitch shaft structure configured to rotate around a pitch axis, and a yaw shaft structure configured to rotate around a yaw axis.

6. The method according to claim 5, wherein:

when the roll axis, the pitch axis, and the yaw axis are respectively orthogonal, a joint angle of the roll shaft structure is a first set joint angle, and an absolute difference between the preset joint angle corresponding to the roll shaft structure and the first set joint angle is 90 degrees; and/or
when the roll axis, the pitch axis, and the yaw axis are respectively orthogonal, a joint angle of the pitch shaft structure is a second set joint angle, and an absolute difference between the preset joint angle corresponding to the pitch shaft structure and the second set joint angle is 0 degree; and/or
when the roll axis, the pitch axis, and the yaw axis are respectively orthogonal, a joint angle of the yaw shaft structure is a third set joint angle, and an absolute difference between the preset joint corresponding to the yaw shaft structure and the third set joint angle is 90 degrees.

7. The method of claim 1, wherein:

the gimbal comprises a hand-held portion, at least one of the rotation shaft structures being disposed on the hand-held portion;
controlling the rotation of the rotation shaft structure to the set position comprises:
controlling the rotation of the rotation shaft structure to a preset attitude with respect to the hand-held portion; and
controlling the rotation shaft structure to remain at the set position for the preset duration comprises:
controlling the rotation shaft structure to maintain the preset attitude for the preset duration.

8. The method according to claim 7, wherein controlling the rotation shaft structure to maintain the preset attitude with respect to the hand-held portion comprises:

determining an attitude deviation between a current attitude of the rotation shaft structure with respect to the hand-held portion and a preset attitude of the rotation shaft structure with respect to the hand-held portion; and
according to the attitude deviation, controlling the rotation shaft structure to rotate to the preset attitude with respect to the hand-held portion.

9. The method according to any one of claims 1 to 8, wherein controlling the rotation of the rotation shaft structure to the set position comprises:
controlling the rotation shaft structure to rotate to the set position at a preset speed.

10. The method according to claim 9, wherein the preset speed has a trend of increasing first then decreasing.

**11.** The method according to claim 9, wherein the preset speed is determined according to a difference between a current position of the rotation shaft structure and the set position.

**12.** The method according to any one of claims 1 to 8, wherein the method further comprises:

determining whether a start event occurs within the preset duration; and
when the start event occurs, controlling the gimbal to exit the storage mode and switch to a start mode.

**13.** The method according to claim 12, wherein the trigger event and/or the start event are triggered by one or more of: pressing a button, human touch operation, human biometric verification, movement of the gimbal, and a state change of the gimbal.

**14.** The method according to any one of claims 1 to 8, wherein before controlling the rotation of the rotation shaft structure to the set position to make the gimbal satisfy the preset storage form, further comprising:

detecting whether the gimbal satisfies the preset storage form; and
if the gimbal does not satisfy the preset storage form, triggering execution to control the rotation of the rotation shaft structure to the set position to make the gimbal satisfy the preset storage form.

**15.** The method according to claim 14, wherein after detecting whether the gimbal satisfies the preset storage form, further comprising:
if the gimbal satisfies the preset storage form, controlling the gimbal to maintain the preset storage form for the preset duration.

**16.** A gimbal comprises:
at least one rotation shaft structure and a processor, wherein the processor is configured to:

when a trigger event indicating that the gimbal enters a storage mode is detected, control rotation of the rotation shaft structure a set position to make the gimbal satisfy a preset storage form; and
control the rotation shaft structure to remain the set position for a preset duration.

**17.** The gimbal according to claim 16, wherein the processor is further configured to:
after controlling the rotation shaft structure to maintain at the set position for the preset duration, control the gimbal to enter a shutdown mode, or control the gimbal to enter a standby mode.

**18.** The gimbal according to claim 16, wherein the processor is configured to:

control the rotation shaft structure to rotate to a preset joint angle; and
control the rotation shaft structure to maintain the preset joint angle for the preset duration.

**19.** The gimbal according to claim 18, wherein the processor is configured to:

determine a joint angle deviation between a current joint angle of the rotation shaft structure and a preset joint angle; and
control the rotation shaft structure to rotate to the preset joint angle according to the joint angle deviation.

**20.** The gimbal according to claim 18, wherein the at least one rotation shaft structure comprises at least one of: a roll shaft structure configured to rotate around a roll axis, a pitch shaft structure configured to rotate around a pitch axis, and a yaw shaft structure configured to rotate around a yaw axis.

**21.** The gimbal according to claim 20, wherein:

when the roll axis, the pitch axis, and the yaw axis are respectively orthogonal, a joint angle of the roll shaft structure is a first joint angle, and an absolute difference between the preset joint angle corresponding to the roll shaft structure and the first set joint angle is 90 degrees; and/or
when the roll axis, the pitch axis, and the yaw axis are respectively orthogonal, a joint angle of the pitch shaft structure is a second set joint angle, and an absolute difference between the preset joint angle corresponding to the pitch shaft structure and the second set joint angle is 0 degree; and/or

when the roll axis, the pitch axis, and the yaw axis are respectively orthogonal, a joint angle of the yaw shaft structure is a third set joint angle, and an absolute difference between the preset joint corresponding to the yaw shaft structure and the third set joint angle is 90 degrees.

22. The gimbal according to claim 16, wherein:

the gimbal comprises: a hand-held portion, at least one of the rotation shaft structures being disposed on the hand-held portion; and
the processor is configured to:

control the rotation shaft structure to rotate to a preset attitude with respect to the hand-held portion; and
control the rotation shaft structure to maintain the preset attitude for the preset duration.

23. The gimbal according to claim 22, wherein the processor is configured to:

determine an attitude deviation between a current attitude of the rotation shaft structure with respect to the hand-held portion and a preset attitude of the rotation shaft structure with respect to the hand-held portion; and
according to the attitude deviation, control the rotation shaft structure to rotate to be in the preset attitude with respect to the hand-held portion.

24. The gimbal according to any one of claims 16 to 23, wherein the processor is configured to:
control the rotation of the rotation shaft structure to the set position at a preset speed.

25. The gimbal according to claim 24, wherein the preset speed has a trend of increasing first then decreasing.

26. The gimbal according to claim 24, wherein the preset speed is determined according to a difference between a current position of the rotation shaft structure and the set position.

27. The gimbal according to any one of claims 16 to 23, wherein the processor is further configured to:

determine whether a start event occurs within the preset duration; and
when the start event occurs, control the gimbal to exit the storage mode and switch to a start mode.

28. The gimbal according to claim 27, wherein the trigger event and/or the start event are triggered by one of: pressing a button, human touch operation, human biometric verification, movement of the gimbal, and a state change of the gimbal.

29. The gimbal according to any one of claims 16 to 23, wherein the processor is further configured to:

detect whether the gimbal satisfies the preset storage form; and
if the gimbal does not satisfy the preset storage form, trigger execution to control the rotation of the rotation shaft structure to the set position to make the gimbal satisfy the preset storage form.

30. The gimbal according to claim 29, wherein the processor is further configured to:
if the gimbal satisfies the preset storage form, control the gimbal to maintain the preset storage form for the preset duration.

31. A mobile platform, wherein the mobile platform comprises a body and a gimbal according to any one of claims 16 to 30, the gimbal being disposed on the body.

32. A computer-readable storage medium on which a computer program is stored, wherein the computer program is executable by a processor to complete the control method according to any one of claims 1 to 15.

When a trigger event indicating that the gimbal enters the storage mode is detected, control the rotation shaft structure to rotate to a set position to make the gimbal to satisfy a preset storage form — 01

Control the rotation shaft structure to remain at the set position for a preset duration — 02

FIG. 1

FIG. 2

When a trigger event indicating that the gimbal enters the storage mode is detected, control the rotation shaft structure to rotate to a set position to make the gimbal to satisfy a preset storage form
01

Control the rotation shaft structure to remain at the set position for a preset duration
02

Control the gimbal to enter the shutdown mode, or controlling the gimbal to enter the standby mode
03

FIG. 3

Control the rotation shaft structure to rotate to a preset joint angle
011

Control the rotation shaft structure to maintain the preset joint angle for the preset duration
021

FIG. 4

Determine a joint angle deviation between a current joint angle of the rotation shaft structure and a preset joint angle
0112

Control the rotation of the rotation shaft structure to the preset joint angle according to the joint angle deviation
0114

Control the rotation shaft structure to maintain the preset joint angle for the preset duration
021

FIG. 5

```
┌──────────────┐   +      Joint Angle        ┌───────────┐  Control       ┌──────────┐  Torque  ┌────────┐
│ Preset Joint │─────⊗──── Deviation ────────│ Processor │─ Instructions ─│ Rotation │─────────│ Gimbal │
│    Angle     │     ⊗                       │           │                │  Motor   │          │        │
└──────────────┘   _                         └───────────┘                └──────────┘          └────────┘
                   │                                                                                   │
                   │              Current                    ┌──────────────┐                          │
                   │            Joint Angle                  │ Angle Sensor │                          │
                   └─────────────────────────────────────────│              │──────────────────────────┘
                                                             └──────────────┘
```

FIG. 6

┌────────────────────────────────────────────────────────┐
│  Control the rotation shaft structure to rotate to be   │     012
│  in a preset attitude with respect to the hand-held     │
│  portion                                                │
└────────────────────────────────────────────────────────┘
                          │
                          ▼
┌────────────────────────────────────────────────────────┐
│  Control the rotation shaft structure to maintain the   │     022
│  preset attitude for the preset duration                │
└────────────────────────────────────────────────────────┘

FIG. 7

┌────────────────────────────────────────────────────────┐
│   Determine an attitude deviation between a current     │
│  attitude of the rotation shaft structure with respect  │    0122
│  to the hand-held portion and a preset attitude of the  │
│  rotation shaft structure with respect to the hand-held │
│  portion                                                │
└────────────────────────────────────────────────────────┘
                          │
                          ▼
┌────────────────────────────────────────────────────────┐
│  Control the rotation of the rotation shaft structure   │    0124
│  to be in the preset attitude with respect to the       │
│  hand-held portion according to the attitude deviation  │
└────────────────────────────────────────────────────────┘
                          │
                          ▼
┌────────────────────────────────────────────────────────┐
│  Control the rotation shaft structure to maintain the   │     022
│  preset attitude for the preset duration                │
└────────────────────────────────────────────────────────┘

FIG. 8

Preset Attitiude — + / − → (⊗) — Attitude Deviation → Processor — Control Instructions → Rotation Motor — Torque → Gimbal

Current Attitude ← Integrator ← Angular Velocity — Gyroscope

FIG. 9

Control the rotation shaft structure to rotate to the set position at a preset speed _013_

Control the rotation shaft structure to remain at the set position for a preset duration _02_

FIG. 10

When a trigger event indicating that the gimbal enters the storage mode is detected, control the rotation shaft structure to rotate to a set position to make the gimbal to satisfy a preset storage form _01_

Control the rotation shaft structure to remain at the set position for a preset duration _02_

Determine whether a start event occurs within the preset duration _04_

Yes _05_

Control the gimbal to exit the storage mode and switch to start mode

FIG. 11

When a trigger event indicating that
the gimbal enters the storage mode is detected,
detect whether the gimbal satisfies
the preset storage form — 06

Yes

No

Control the gimbal to remain in the preset storage form for the preset duration — 08

Trigger execution to control the rotation shaft structure to rotate to the set position to make the gimbal to satisfy the preset storage form — 07

Control the rotation shaft structure to remain at the set position for a preset duration — 02

FIG. 12

1000

300

Gimbal — 100

FIG. 13

400 — Computer-readable Storage Medium

Computer Program

Gimbal — 100

Processor — 20

FIG. 14

## INTERNATIONAL SEARCH REPORT

International application No.

**PCT/CN2018/118025**

### A. CLASSIFICATION OF SUBJECT MATTER

G05D 3/12(2006.01)i

According to International Patent Classification (IPC) or to both national classification and IPC

### B. FIELDS SEARCHED

Minimum documentation searched (classification system followed by classification symbols)

G05D; H02P; F16M

Documentation searched other than minimum documentation to the extent that such documents are included in the fields searched

Electronic data base consulted during the international search (name of data base and, where practicable, search terms used)

VEN; CNABS; CNTXT; CNKI: holder, pan/tilt, cloud platform, UAV, control+, unmanned, stor+, shaft?, 云台, 控制, 转轴, 收纳, 收回, 关机, 待机, 姿态, 状态, 形态, 关节角

### C. DOCUMENTS CONSIDERED TO BE RELEVANT

| Category* | Citation of document, with indication, where appropriate, of the relevant passages | Relevant to claim No. |
|---|---|---|
| X | CN 108323191 A (SZ DJI TECHNOLOGY CO., LTD.) 24 July 2018 (2018-07-24) description, paragraphs [0022]-[0055], and figures 1-6 | 1-2, 7-8, 12-17, 22-23, 27-32 |
| Y | CN 108323191 A (SZ DJI TECHNOLOGY CO., LTD.) 24 July 2018 (2018-07-24) description, paragraphs [0022]-[0055], and figures 1-6 | 3-6, 9-11, 18-21, 24-26 |
| Y | CN 108780328 A (SZ DJI OSMO TECHNOLOGY CO., LTD.) 09 November 2018 (2018-11-09) description, paragraphs [0041]-[0059] | 3-6, 9-11, 18-21, 24-26 |
| A | WO 2017222541 A1 (INTEL IP CORP.) 28 December 2017 (2017-12-28) entire document | 1-32 |
| A | CN 106953553 A (NINEBOT (BEIJING) TECHNOLOGY CO., LTD.) 14 July 2017 (2017-07-14) entire document | 1-32 |
| A | CN 108413205 A (GUANGDONG SIRUI OPTICAL CO., LTD.) 17 August 2018 (2018-08-17) entire document | 1-32 |

☐ Further documents are listed in the continuation of Box C.  ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **07 August 2019** | **21 August 2019** |

| Name and mailing address of the ISA/CN | Authorized officer |
|---|---|
| **State Intellectual Property Office of the P. R. China No. 6, Xitucheng Road, Jimenqiao Haidian District, Beijing 100088 China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2018/118025**

| Patent document cited in search report | | | Publication date (day/month/year) | Patent family member(s) | | | Publication date (day/month/year) |
|---|---|---|---|---|---|---|---|
| CN | 108323191 | A | 24 July 2018 | None | | | |
| CN | 108780328 | A | 09 November 2018 | WO | 2019119201 | A1 | 27 June 2019 |
| WO | 2017222541 | A1 | 28 December 2017 | None | | | |
| CN | 106953553 | A | 14 July 2017 | None | | | |
| CN | 108413205 | A | 17 August 2018 | None | | | |

Form PCT/ISA/210 (patent family annex) (January 2015)